Europäisches Patentamt

European Patent Office

Office européen des brevets

(19)

(11) **EP 1 230 784 B1**

(12) **FASCICULE DE BREVET EUROPEEN**

(45) Date de publication et mention
de la délivrance du brevet:
**28.04.2004 Bulletin 2004/18**

(51) Int Cl.⁷: **H04M 9/08**

(86) Numéro de dépôt international:
**PCT/FR2001/002957**

(21) Numéro de dépôt: **01972191.9**

(22) Date de dépôt: **24.09.2001**

(87) Numéro de publication internationale:
**WO 2002/030099 (11.04.2002 Gazette 2002/15)**

(54) **PROCEDE ET DISPOSITIF DE REDUCTION D'ECHO**

VERFAHREN UND VORRICHTUNG ZUR ECHOVERMINDERUNG

ECHO ATTENUATING METHOD AND DEVICE

(84) Etats contractants désignés:
**AT BE CH CY DE DK ES FI FR GB GR IE IT LI LU
MC NL PT SE TR**

(30) Priorité: **03.10.2000 FR 0012618
20.07.2001 FR 0109781**

(43) Date de publication de la demande:
**14.08.2002 Bulletin 2002/33**

(73) Titulaire: **FRANCE TELECOM
75015 Paris (FR)**

(72) Inventeur: **DEBAIL, Bernard
F-22560 Pleumeur Bodou (FR)**

(74) Mandataire: **Jeune, Pascale et al
France Télécom R&D/VAT/PI
38-40, rue du Général-Leclerc
92794 Issy Moulineaux Cedex 9 (FR)**

(56) Documents cités:
**EP-A- 0 503 660**

• **KELLERMANN W: "Strategies for combining
acoustic echo cancellation and adaptive
beamforming microphone arrays" ACOUSTICS,
SPEECH, AND SIGNAL PROCESSING, 1997.
ICASSP-97., 1997 IEEE INTERNATIONAL
CONFERENCE ON MUNICH, GERMANY 21-24
APRIL 1997, LOS ALAMITOS, CA, USA,IEEE
COMPUT. SOC, US, 21 avril 1997 (1997-04-21),
pages 219-222, XP010226174 ISBN:
0-8186-7919-0**
• **DAHL M ET AL: "ACOUSTIC NOISE AND ECHO
CANCELING WITH MICROPHONE ARRAY" IEEE
TRANSACTIONS ON VEHICULAR
TECHNOLOGY, IEEE INC. NEW YORK, US, vol.
48, no. 5, septembre 1999 (1999-09), pages
1518-1526, XP000912523 ISSN: 0018-9545**
• **ARIKAWA T ET AL: "Evolution of
computer-human interface design for the
personal multimedia desktop conference
system" PROCEEDINGS OF THE
INTERNATIONAL CONFERENCE ON
COMMUNICATIONS (ICC). GENEVA, MAY 23 - 26,
1993, NEW YORK, IEEE, US, vol. 3, 23 mai 1993
(1993-05-23), pages 1172-1176, XP010137044
ISBN: 0-7803-0950-2**
• **WOLFGANG TAEGER: 'Near Field
Superdirectivity' PROCEEDINGS OF THE 1998
IEEE INTERNATIONAL CONFERENCE ON
ACOUSTICS, SPEECH AND SIGNAL
PROCESSING vol. 4, 12 Mai 1998 - 15 Mai 1998,
pages 2045 - 2048**

**Description**

Domaine de l'invention

L'invention se rapporte au domaine de l'acoustique aérienne appliquée à des systemes de sonorisation pour des salles en particulier.

La présente invention se rapporte à un procédé de réduction d'écho mis, en oeuvre avec un dispositif de prise de son multi-capteurs formant une antenne et un dispositif de restitution sonore. L'invention se rapporte en outre à un dispositif de réduction d'écho, destiné à fonctionner avec un dispositif de restitution sonore pour la mise en oeuvre d'un procédé selon l'invention. Le domaine fréquentiel auquel se rapporte l'invention est celui de la parole et plus particulièrement celui des signaux de parole basses fréquences.

Description de l'art antérieur

L'invention trouve une application très avantageuse en ce qu'elle permet, par la réduction d'écho dans un dispositif de prise de son d'un système de téléconférence, de s'affranchir d'un microphone déporté pour permettre des communications dites mains-libres.

L'écho acoustique est l'obstacle majeur au bon fonctionnement des terminaux de communication mains-libres. Cet écho acoustique résulte de la capture par les capteurs du dispositif de prise de son, d'une partie du signal émis par les transducteurs du dispositif de restitution sonore. Les capteurs et les transducteurs utilisés en acoustique aérienne sont respectivement des microphones et des hauts parleurs.

Dans un terminal de communication mains-libres, les microphones sont en couplage acoustique, et éventuellement en couplage mécanique avec le système de restitution du son soit de manière directe lorsque les microphones et le système de restitution sont dans la même coque, soit de manière indirecte comme dans le cas d'un terminal de visioconférence posé sur un moniteur de télévision. L'écho résultant se décompose en deux parties :

- la réponse de la salle,
- le couplage direct haut parleur / microphone.

La réponse de la salle est en général traitée efficacement par des techniques classiques de contrôle d'écho telles que l'annulation d'écho ou la variation de gain, en particulier du fait du niveau assez faible de cette partie de l'écho. Il n'en est pas de même pour le couplage direct qui résulte à la fois du trajet acoustique aérien mais également des propagations de vibrations à travers la coque du terminal de communication ainsi que d'éventuelles résonances de cavités ou d'éléments mécaniques dans le cas de coffrets de moniteurs de télévision. Cette partie de l'écho, en général supérieure de 6 à 20 dB à la parole locale captée par les microphones, entraîne l'effet Larsen si aucun traitement n'est appliqué.

Si les techniques connues d'annulation d'écho ne permettent pas de traiter de manière satisfaisante cet effet néfaste, une variation de gain importante doit être implantée pour éviter le départ en Larsen. Cette variation de gain doit intervenir d'une part pendant la phase de convergence du dispositif d'annulation d'écho et d'autre part à la suite d'une variation du chemin d'écho ou pendant les moments de double parole. Du fait de cette contrainte, le terminal de communication est rendu peu interactif et l'utilisateur peut considérer que la fonction mains libres n'est pas performante.

Pour pallier cet inconvénient, il existe plusieurs techniques qui portent sur la réduction du couplage direct.

Une première technique s'attache à réduire le couplage mécanique. La solution habituellement mise en oeuvre consiste à faire usage de matériaux antivibratoires tels que des mousses ou du caoutchouc qui désolidarisent le microphone de la coque. Ces matériaux ont pour effet de supprimer ou de diminuer fortement les vibrations de la coque engendrées par le haut parleur et leur propagation vers le microphone.

La solution du découplage mécanique diminue effectivement le couplage par les vibrations, mais elle s'avère une solution industriellement chère. Par ailleurs, elle ne réduit pas le couplage acoustique qui peut se révéler important si le microphone est placé près du haut parleur, ce qui est aujourd'hui la tendance du fait de l'attrait pour des terminaux de communication de taille réduite. En outre, lorsque le système de restitution fait partie intégrante d'un ensemble comprenant le dispositif de prise de son, comme dans le cas d'un moniteur de télévision incluant des haut-parleurs et des microphones ou d'un moniteur sur lequel est placé un dispositif incluant des microphones, il n'est pas envisageable de désolidariser les hauts parleurs de la coque de l'ensemble.

Une seconde technique consiste à utiliser un filtre numérique de compensation dont la réponse est le résultat du calcul de l'inverse de la réponse impulsionnelle du couplage mécanique et acoustique entre le microphone et le haut parleur.

En théorie, à la sortie du filtre de compensation le signal en provenance du haut parleur dû à l'écho est annulé. En pratique, cette technique ne donne pas satisfaction si le couplage change dans ses caractéristiques, même d'une façon minime, suite par exemple à un montage/démontage du terminal de communication ou suite à un changement des caractéristiques des microphones. Par ailleurs cette technique n'est pas adaptée si la nature des perturbations n'est pas linéaire, c'est-à-dire si les perturbations ne peuvent pas être modélisées par un produit de convolution entre le signal provenant du haut parleur et une réponse impulsionnelle de filtrage. Qui plus est, le fonctionnement des transducteurs est rarement linéaire, car ils sont généralement sujets à des distorsions et/ou à des saturations, qui sont des exemples types de fonctions non linéaires. Enfin, lors d'une production en grande série, le couplage est forcément différent d'un terminal de communication à un autre, du fait par exemple de l'utilisation de haut-parleurs ou de microphones légèrement différents entre eux. Finalement, ces limitations rendent cette technique de compensation par filtre peu efficace.

Il existe d'autres systèmes de pondération de microphones basés sur une équi-répartition des microphones autour d'un haut-parleur associée à une pondération simple des microphones ou à un déphasage des microphones. De tels systèmes font l'objet du brevet français 93 02054. Ces systèmes sont destinés aux terminaux de communication de groupe qui possèdent une symétrie géométrique bien particulière due à leur prise de son omnidirectionnelle. L'efficacité de ces systèmes est très sensible aux disparités des microphones ou des voies d'acquisition. Ces systèmes nécessitent par conséquent un tri des composants et un calibrage précis des microphones qui peut être mis en défaut au cours du temps. En outre, l'ajout de cadran de visualisation, de clavier, de caméra pivotante peut rompre les propriétés de symétrie des hauts parleurs vis-à-vis des microphones. Par ailleurs, dans le cas où le nombre de microphones N dépasse deux ces dispositifs ne sont pas optimaux car N degrés de liberté sont disponibles pour satisfaire deux contraintes, la fixation d'un gain dans une direction donnée et l'annulation du couplage direct. Enfin, comme le signal capté correspond, vis-à-vis de la source utile, à l'ensemble des contributions de chaque microphone et comme ces contributions sont déphasées entre elles et sont éventuellement d'amplitudes différentes, le signal résultant a un spectre dégradé en hautes fréquences.

Un autre système visant des applications plutôt individuelles, connu par exemple du brevet français 98 14321, offre l'avantage de prendre en compte les spécificités du terminal final, c'est-à-dire du terminal de communication après son intégration. Ce système met en oeuvre deux microphones positionnés à des distances différentes. du haut-parleur. Les contributions des deux microphones sont combinées par pondération afin d'annuler l'onde directe de couplage. La pondération différente des deux signaux provenant des deux microphones permet de capter les sources utiles situées dans un champ lointain. Le calcul du filtre de voie appliqué au deuxième microphone peut être obtenu en inversant la réponse d'une mesure de couplage entre le microphone et le haut parleur. Un tel calcul est généralement suffisant dans la plupart des situations puisque les microphones sont dans le champ direct du haut parleur. Cependant, cette solution nécessite l'existence d'une différence d'amplitude suffisante de l'onde de couplage entre les deux microphones. Pour obtenir une telle différence, il est nécessaire de positionner les microphones suffisamment près du haut parleur ce qui entraîne des conditions très défavorables en terme de couplage. Alors que cette condition n'est pas gênante pour un système individuel pour lequel cette disposition est imposée, il n'en est pas de même pour d'autres systèmes tels que des terminaux de visioconférence de type "Set-top-box", c'est-à-dire des terminaux dont la forme permet de les poser sur un moniteur de télévision. Suivant ce principe, plus les microphones sont éloignés du haut parleur plus la distance d'espacement inter capteurs devra être grande. Ceci conduit à une limitation de la bande passante et à une sensibilité plus grande aux obstacles situés à proximité. Enfin, une amplification du bruit incohérent est à déplorer et n'est contrôlable qu'en modifiant la distance séparant les deux microphones.

Finalement, la directivité de ces dispositifs n'est que partiellement contrôlable et est peu différente de la directivité propre des microphones.

Parallèlement à ces solutions, il existe des techniques multi capteurs qui cherchent à se prémunir du couplage acoustique en rendant le système globalement directif. En effet, lorsque la source sonore est située dans un environnement bruyant ou réverbérant, la directivité d'un capteur seul peut ne pas être suffisante pour extraire le signal du bruit.

Pour remédier à ce problème, une méthode consiste à associer N capteurs pour former une antenne acoustique. Cette association consiste à additionner en cohérence de phase les signaux de sortie des différents capteurs pour une direction $(\varphi,\theta)$ donnée. Cette addition est une des techniques regroupées sous l'appellation formation de voies. Un capteur, ou un transducteur, est caractérisé par sa directivité dans l'espace qui est habituellement mesurée dans deux plans orthogonaux et représentée en coordonnées polaires $(r,\varphi,\theta)$ sous la forme de deux diagrammes. La directivité d'un capteur donne une " image" du niveau de signal capté par ce capteur pour une source sonore ponctuelle située dans une direction $(\varphi,\theta)$ et à une distance r du centre du capteur. La directivité de l'antenne obtenue à l'issue de la formation de voie a des performances meilleures que la directivité d'un seul capteur. Les N microphones, séparés entre eux d'une distance d, captent la pression en une région localisée de l'espace et opèrent un échantillonnage spatial du champ sonore. Cette méthode offre en hautes fréquences une efficacité certaine, mais en basses fréquences $(f < 1000$ Hz), la difficulté persiste pour plusieurs raisons :

- un manque de directivité du fait de la taille réduite de l'antenne,
- une moins bonne robustesse du fait de la sensibilité importante aux disparités entre capteurs en basses fréquences, du fait de l'effet éventuel de l'écran de télévision,

- un diagramme directionnel de l'antenne pour une source située à l'emplacement des enceintes différent du diagramme directionnel à 3 m car l'hypothèse de champ lointain n'est pas vérifiée dans le premier cas.

Le document "Near field superdirectivity (NFSD) Täger, Wolfgang; Acoustics, Speech, and Signal Processing, 1998. ICASSP'98. Proceedings of the 1998 IEEE International Conference on Acoustics, Speech and Signal Processing, Volume: 4, 12-15 May 1998 Page(s); 2045-2048 vol.4" divulgue une formulation théorique pour la prise en compte de contraintes linéaires dans le but de réduire l'effet de couplage acoustique.

Ainsi un but de l'invention est de réduire l'écho produit par le couplage acoustique entre le dispositif de prise de son et le dispositif de restitution sonore sans les inconvénients des dispositifs et méthodes connus.

Résumé de l'invention

A cet effet, l'invention a pour objet un procédé de réduction d'écho, selon la revendication 1.

Ainsi, l'invention prend en compte des contraintes sur le couplage direct lors du calcul de la formation de voies. Le calcul de la formation de voies n'est pas effectué uniquement sur la base de modèles théoriques de propagation ou de mesures effectuées en chambre sourde mais aussi sur la base d'estimées des fonctions de transfert obtenues "in situ". Ainsi, l'invention permet de réduire le couplage direct et/ou semi-direct tout en imposant une directivité souhaitée et en contrôlant l'amplification maximale du bruit incohérent.

L'invention s'applique en particulier à des dispositifs de prise de son pour des visioconférences de groupe.

L'invention a pour avantage de prendre en compte automatiquement l'environnement acoustique proche (forme du moniteur de télévision et du boîtier contenant l'antenne, position de celui-ci au regard du moniteur, obstacle proche ou présence d'un mur à proximité), la réponse des haut-parleurs et la disparité des capteurs. En outre, l'optimisation étant effectuée en aveugle, le procédé selon l'invention ne nécessite pas de faire des hypothèses préalables sur la connaissance de la position des haut-parleurs, sur les caractéristiques électro-acoustiques des haut-parleurs et des capteurs.

Brève description des dessins

D'autres caractéristiques et avantages de l'invention apparaîtront lors de la description qui suit faite en regard de figures annexées données à titre d'exemples non limitatifs.

La figure 1 est un organigramme d'une première mise en oeuvre d'un procédé selon l'invention.
La figure 2 est un repère en coordonnées polaires.
La figure 3 est un organigramme d'une seconde mise en oeuvre d'un procédé selon l'invention.
La figure 4 est un schéma d'une réalisation particulière d'un dispositif de réduction d'écho fonctionnant avec un système acoustique pour la mise en oeuvre d'un procédé selon l'invention.
La figure 5 est un synoptique d'une mise en oeuvre d'un procédé selon l'invention.

Description détaillée d'un mode de réalisation

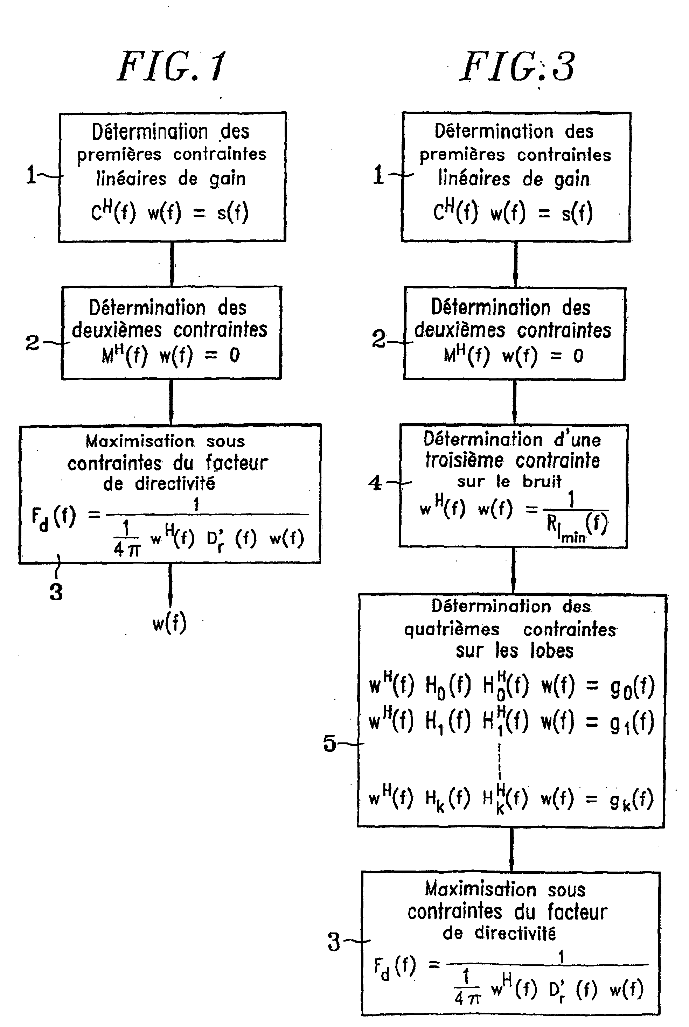

Le procédé de réduction d'écho selon l'invention est mis en oeuvre avec un dispositif de prise de son multicapteurs formant une antenne et un dispositif de restitution sonore. Le procédé selon l'invention consiste à soumettre les signaux de sortie des capteurs du dispositif de prise de son à des pondérations complexes $\mathbf{w}(f)$, les dites pondérations étant calculées par une maximisation sous contraintes aux basses fréquences et en champ proche du facteur de directivité $F_d(f)$. Le procédé se déroule suivant plusieurs étapes décrites ci-après et illustrées par la figure 1.

Dans une première étape 1, le procédé selon l'invention consiste à déterminer l'expression de la première contrainte (3) linéaire de gain désiré en champ lointain dans les directions correspondant à des sources utiles (locuteurs), définies par l'équation matricielle :

$$C^H(f)w(f)=s(f) \qquad (3)$$

équation dans laquelle,

C(f) est la matrice dite "de contraintes" contenant les vecteurs de propagation théoriques calculés à partir d'un modèle de propagation de type champ libre ou mesurés en condition de champ libre,

$\mathbf{w}(f)$ est le vecteur des pondérations complexes des signaux de sortie des capteurs à la fréquence f,

**s**(f) sont les gains complexes désirés dans des directions données.

Dans une deuxième étape 2, le procédé selon l'invention consiste à déterminer l'expression de la deuxième contrainte (4) déterminée à partir de mesures "in situ" des fonctions de transfert complexes de canaux acoustiques délimités par les entrées des haut-parleurs du dispositif de restitution sonore et les sorties des capteurs composant le dispositif de prise de son, cette contrainte étant définie par l'équation matricielle :

$$M^H(f)w(f) = 0 \tag{4}$$

équation dans laquelle,

**M**(f) est une matrice de contraintes de couplage contenant les fonctions de transfert complexes mesurées in situ des canaux acoustiques délimités par les entrées des haut-parleurs du dispositif de restitution sonore et les sorties des capteurs composant le dispositif de prise de son et,

**0** est un vecteur nul.

Dans une troisième étape 3, le procédé selon l'invention consiste à maximiser le facteur de directivité (1) en champ proche.

Le facteur de directivité en champ proche $F_d$ est défini par l'équation :

$$F_d(f) = \frac{1}{\frac{1}{4\pi} \, w^H(f)D_r(f)w(f)} \tag{1}$$

avec

$$\mathbf{D}_r(f) = \int_{\theta=0}^{\pi} \int_{\varphi=0}^{2\pi} W(f,\varphi,\theta)\mathbf{H}(f,r,\varphi,\theta)\mathbf{H}^H(f,r,\varphi,\theta)\sin\theta\,d\theta\,d\varphi \tag{2}$$

équations dans lesquelles,

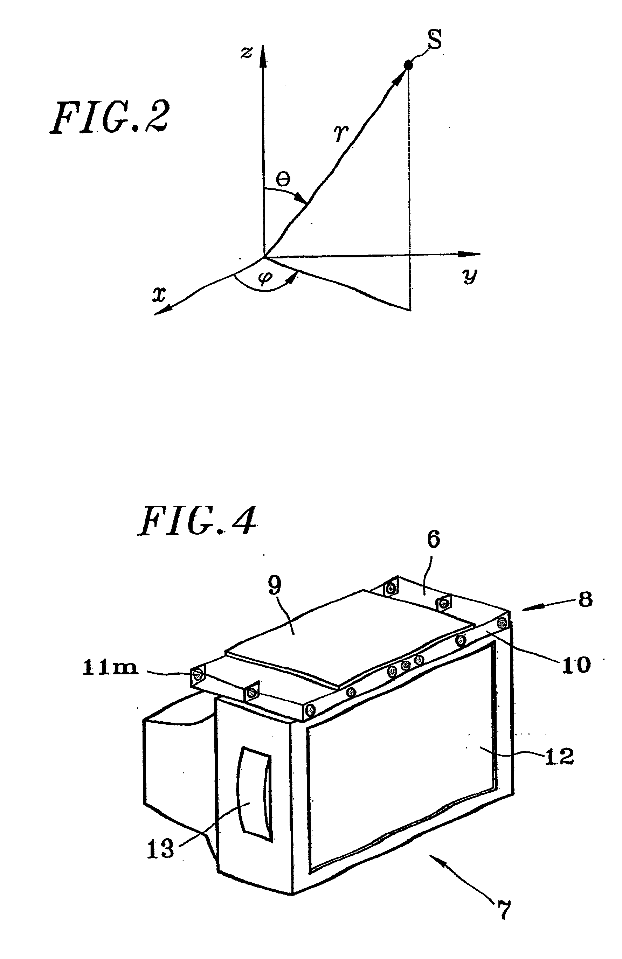

**H** est le vecteur de propagation dont les éléments sont les valeurs complexes des fonctions de transfert en champ libre entre une source ponctuelle S, représentée sur la figure 2, située à la distance r du centre de l'antenne dans la direction définie par les angles polaires $\varphi$ et $\theta$ et chaque capteur de l'antenne, calculées à la fréquence f,

**D**$_r$(f) est la "matrice de directivité" qui caractérise les propriétés de sélectivité spatiale de l'antenne à la distance r,

$W(f,\varphi,\theta)$ sont des pondérations spatiales permettant une atténuation plus importante des ondes provenant des directions des haut-parleurs pour réduire le couplage direct avec ceux-ci.

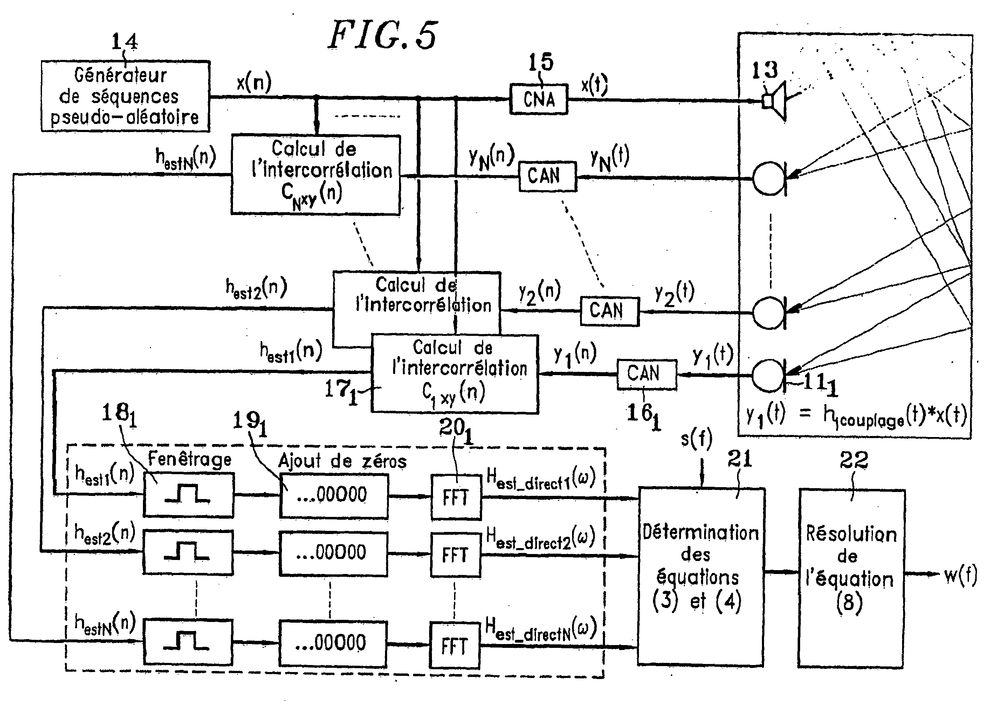

Lors de la maximisation du facteur de directivité, les contraintes suivantes peuvent en outre être prises en compte à titre facultatif lors de la mise en oeuvre du procédé, un organigramme du procédé correspondant est illustré par la figure 3 :

- une troisième contrainte (4) non linéaire de robustesse au bruit incohérent dont le facteur de réduction minimal $R_{I_{\min}}(f)$ fixe la valeur, suivant l'équation :

$$w(f)^H w(f) = \frac{1}{R_{I_{\min}}(f)} \tag{5}$$

- des quatrièmes contraintes (5) non-linéaires sur l'ouverture du lobe principal et/ou sur les gains en amplitude dans des directions données et sur la réduction des lobes d'aliasing et des lobes secondaires. Ces contraintes permettent en premier lieu de garantir une largeur suffisante du lobe principal de l'antenne pour couvrir correctement la zone angulaire où peuvent se trouver les directions des sources utiles, elles complètent en ce sens la contrainte linéaire correspondant à l'équation (3). En second lieu, elles permettent de maintenir actifs des microphones à des fréquences pour lesquelles l'espacement est trop grand pour respecter les conditions de Shannon, en limitant le niveau des lobes d'aliasing en résultant ainsi que des lobes secondaires. Ces contraintes permettent ainsi d'aboutir à des facteurs de directivité plus élevés notamment dans les bandes fréquentielles où certains capteurs passent de l'état actif à l'état inactif. Elles autorisent ainsi la mise en oeuvre d'un nombre plus limité de capteurs, donc une optimisation du coût du dispositif. Elles s'expriment sous la forme d'un système d'équations non linéaires :

$$\mathbf{w}^{H}(f)\mathbf{H}_{0}(f)\mathbf{H}_{0}^{H}(f)\mathbf{w}(f)=g_{0}(f) \qquad (6)$$
$$\mathbf{w}^{H}(f)\mathbf{H}_{1}(f)\mathbf{H}_{1}^{H}(f)\mathbf{w}(f)=g_{1}(f)$$
$$\vdots$$
$$\mathbf{w}^{H}(f)\mathbf{H}_{k}(f)\mathbf{H}_{k}^{H}(f)\mathbf{w}(f)=g_{k}(f)$$

système d'équations dans lequel,

$\mathbf{H}_i$, i=0, ..., k représente le vecteur de propagation entre une source ponctuelle en champ lointain dans la direction angulaire $(\varphi_i, \theta_i)$ et les microphones de l'antenne et,

$g_i$ le gain désiré dans cette direction. Ainsi, $g_0$ représente le gain désiré, par exemple -3 dB, dans la direction correspondant à l'ouverture du lobe principal, par exemple ±30 degrés par rapport au centre de celui-ci.

Ces différentes contraintes facultatives sont prises en compte en modifiant l'expression de la matrice de directivité suivant la formule :

$$\mathbf{D}_{r}'(f)=\mathbf{D}_{r}(f)+\mu(f)\mathbf{I}+\sum_{i=0}^{k}\alpha_{i}(f)\mathbf{H}_{i}(f)\mathbf{H}_{i}^{H}(f) \qquad (7)$$

où $\mu(f)$ est un coefficient de Lagrange qui est ajusté pour satisfaire la contrainte de robustesse (5), et $\alpha_i(f)$, i=0, ..., k est un jeu de coefficients de Lagrange ajustés pour satisfaire les contraintes non-linéaires sur l'ouverture du lobe principal et sur la réduction des lobes d'aliasing et des lobes secondaires (6).

La solution optimale du problème est donnée par la formule :

$$w(f) = D_{r}'^{-1}(f)C(f)(C^{H}(f)D_{r}'^{-1}(f)C(f))^{-1} s(f) \qquad (8)$$

Une telle optimisation permet de réduire la sensibilité de l'antenne pour des sources proches sans modifier de manière significative les performances de l'antenne en champ lointain.

Le schéma de la figure 4 est un exemple d'un dispositif 6 de réduction d'écho fonctionnant avec un système 7 acoustique pour la mise en oeuvre d'un procédé selon l'invention.

Le dispositif 6 de réduction d'écho se présente sous la forme d'une boîte de type "Set-top-box". La boîte comprend un dispositif 8 de prise de son aérien et un module 9 électronique de calcul. Le dispositif 8 de prise de son aérien consiste en une antenne 10 formée, suivant l'exemple retenu, par onze microphones $11_m$ , vus par transparence sur le schéma, répartis suivant trois plans parallèles, m=1, 2,...N avec N=11. Le module 9 électronique de calcul comprend des moyens de calcul pour calculer les différentes contraintes et, en particulier, la première contrainte exprimée par la relation (3) et la deuxième contrainte exprimée par la relation (4). Les moyens de calcul consistent typiquement en des circuits intégrés de traitement du signal qui effectuent les calculs en temps réel. Selon une variante, ils peuvent consister en un processeur d'usage général suffisamment rapide tel que ceux actuellement intégrés dans les terminaux de téléconférence évolués.

Le système 7 acoustique comprend un moniteur 12 de télévision et un dispositif 13 de restitution sonore constitué de deux hauts-parleurs disposés de part et d'autre du moniteur de télévision.

En basses fréquences, du fait d'indices de superdirectivité élevés, l'antenne 10, bien que pointant vers un locuteur situé en champ lointain, possède une sensibilité accrue pour les sources situées en champ proche. Les haut-parleurs constituent des sources proches de même que les sources images des hauts-parleurs lorsque le système 7 est disposé près d'un mur. Ces réflexions/diffusions sont fortement énergétiques du fait de leur précocité. Cet effet est d'autant plus notable que dans ces bandes de fréquences, les ondes acoustiques ne subissent qu'une faible atténuation par absorption des surfaces réfléchissantes.

Pour réduire la sensibilité de l'antenne 10 pour des sources proches sans modifier de manière conséquente les performances de l'antenne 10 en champ lointain, le dispositif 6 de réduction d'écho maximise sous contraintes le facteur de directivité en champ proche défini par la relation (1) selon le procédé selon l'invention. Dans la relation (2) les directions 0 et $\pi$, qui correspondent aux directions des hauts parleurs du système 7, sont pondérées de façon plus importante par la fonction de pondération spatiale w de telle sorte que le couplage acoustique direct soit minimisé.

La mise en oeuvre d'un procédé selon l'invention avec le dispositif de réduction d'écho et le dispositif de restitution sonore est détaillé en regard des figures 4 et 5.

Après mise sous tension du moniteur 12 de télévision et de la boîte 6, un signal de mesure $x(n)$ généré par un générateur 14 est converti en analogique par un convertisseur 15 numérique analogique. La sortie $x(t)$ du convertisseur 15 est transmise séparément sur chacun des haut-parleurs 13 du moniteur 12 de télévision. Selon l'exemple, le générateur 14 génère une séquence pseudo-aléatoire de longueur maximale, dite MLS. Le signal $y_m(t)$ issu de chaque microphone $11_m$ constituant l'antenne acoustique est numérisé par un convertisseur $16_m$ analogique numérique sous la forme d'un signal numérique $y_m(n)$

La réponse impulsionnelle estimée $h_{estm}(n)$ de chaque canal acoustique haut-parleur / microphone m , m=1, 2,...N avec N=11, est déterminée à partir du signal $y_m(n)$ par un calculateur $17_m$ effectuant un calcul du domaine de l'état de l'art. Lorsque le signal de mesure $x(t)$ est une séquence MLS, la réponse impulsionnelle estimée $h_{estm}(n)$ peut être déterminée par intercorrélation en utilisant en particulier une transformée de Hadamard.

Un fenêtrage $18_m$ temporel est pratiqué sur la réponse impulsionnelle estimée $h_{estm}(n)$ de chaque canal acoustique haut-parleur / microphone, afin de ne tenir compte que du trajet direct et d'un petit nombre de réflexions précoces désignés respectivement dans la suite par les termes couplage direct et couplage semi-direct. Ainsi, cette réduction du couplage s'appuie sur les éléments du couplage les plus stables (trajet acoustique direct et premières réflexions sur les obstacles fixes, par exemple les murs à proximité) et écarte les parties des éléments du couplage susceptibles de se modifier rapidement dans le temps (par exemple en raison des mouvements et déplacements des locuteurs). A cet fin, le maximum à court terme de la réponse impulsionnelle du microphone central est recherché et le numéro $n_0$ de l'échantillon correspondant est relevé. Pour chaque réponse impulsionnelle, il est procédé à une transformée de Fourier rapide (FFT) sur une zone temporelle délimitée par une fenêtre d'analyse centrée sur l'échantillon $n_0$.

Dans le cas où plusieurs contraintes de couplage sont prises en compte, il y a autant de fenêtres d'analyse que de contraintes de couplage. La fenêtre d'analyse peut être rectangulaire ; cependant d'autres formes de fenêtres telles que Hamming, etc peuvent être avantageusement utilisées. L'étendue de la fenêtre d'analyse est choisie courte, typiquement de l'ordre de 64 à 256 échantillons, soit de 4 à 16 millisecondes pour une fréquence d'échantillonnage $f_e$ = 16 kHz. Il est donc nécessaire d'ajouter $19_m$ des zéros à la suite de la fenêtre d'analyse pour améliorer la résolution fréquentielle avant de procéder à la FFT $20_m$. Le résultat de la FFT est la fonction de transfert complexe $H_{est\_directm}(\omega)$ correspondant à chaque canal acoustique haut-parleur /microphone m de l'antenne, après pondération temporelle privilégiant le couplage direct et / ou semi-direct.

Les coefficients $\mathbf{w}(f)$ de pondération de la formation de voie sont calculés 21, 22 à partir de ces différentes fonctions de transfert suivant la méthode d'optimisation du facteur de directivité en champ proche décrite en regard de la figure 1. La matrice $\mathbf{M}(f)$ de la relation (4) contient les fonctions de transfert complexes de couplage obtenues précédemment, ces fonctions correspondant aux vecteurs de propagation mesurés. La solution optimale est calculée suivant l'expression (8) dans laquelle la matrice $\mathbf{C}(f)$ contient à la fois les vecteurs de propagation théoriques de type champ libre, c'est-à-dire les contraintes en champ lointain pour les sources utiles, et les vecteurs de propagation mesurés. Le vecteur de contrainte s(f) contient typiquement des retards purs représentant la contrainte (3) sur les locuteurs utiles, et des zéros pour la contrainte sur le couplage suivant l'équation (4).

Les données numériques suivantes données à titre d'exemple sont extraites de mesures effectuées sur des enregistrements réalisés dans une salle au moyen d'un dispositif 6 de réduction d'écho fonctionnant avec un système 7 acoustique comme représentés sur la figure 4. Le procédé selon l'invention a été mis en oeuvre pour des fréquences inférieures ou égales à 1400 Hz. Les analyses fréquentielles ont été effectuées sur une fenêtre de 256 points étendue à 1024 points par l'ajout de zéros comme décrit précédemment. Les filtres de voies calculés sont de type FIR à 152 coefficients, ce qui permet d'obtenir une approximation satisfaisante du gabarit de filtrage souhaité.

Une première série de mesures prise comme référence se rapporte à la réponse impulsionnelle obtenue en sortie de la formation de voie correspondant à la maximisation sans contrainte du facteur de directivité en champ lointain. Une deuxième série de mesures se rapporte à la réponse impulsionnelle obtenue en sortie de la formation de voie calculée après prise en compte d'une seule contrainte sur le couplage direct. Une troisième série de mesures se rapporte à la réponse impulsionnelle obtenue en sortie de la formation de voie calculée après prise en compte de deux contraintes sur le couplage au moyen de deux fenêtres d'analyse : la première est centrée sur l'onde directe et la seconde est décalée par rapport à la première de telle sorte qu'elle soit centrée sur une réflexion précoce.

La comparaison de la réponse impulsionnelle obtenue soit par application de deux contraintes, soit par application d'une seule contrainte sur le couplage direct, avec la réponse impulsionnelle obtenue au moyen de la maximisation sans contrainte du facteur de directivité en champ lointain, fait ressortir la réduction de l'effet du couplage. Cette réduction est principalement mesurable sur le début de la réponse impulsionnelle, bien qu'une atténuation de la réponse impulsionnelle persiste au-delà. En effet, le procédé selon l'invention permet non seulement d'atténuer l'effet du couplage direct mais en outre il est efficace pour atténuer l'effet du couplage global. Une analyse en fréquence indique que la réduction d'écho obtenue au moyen des deux contraintes est de l'ordre de 6 à 8 dB pour les fréquences inférieures à 250 Hz.

L'examen des échogrammes correspondant à la première série de mesures et à la troisième série de mesures confirme une atténuation importante au niveau de l'onde directe pouvant aller jusqu'à 20 dB. Le traînage en fin de réponse impulsionnelle est également réduit de façon importante.

L'émission d'une séquence de longueur maximale MLS lors de la mise sous tension du système, pour mesurer les réponses impulsionnelles. de couplage, peut fournir une estimation robuste même si simultanément les locuteurs se mettent à parler ; la séquence MLS étant décorrélée du signal de parole. Néanmoins, afin d'éviter que la variance introduite de ce fait dans l'estimée des fonctions de transfert ne dégrade les performances du procédé, des précautions peuvent être prises telles que le rejet de la mesure si une parole locale a été détectée au niveau de la prise de son, le moyennage de plusieurs mesures, etc. L'estimation des fonctions de transfert est peu sensible au mouvement des locuteurs tant que ceux-ci ne se trouvent pas à proximité directe du système puisque seul le couplage direct ou proche est analysé. En outre, le traitement ayant lieu uniquement en basses fréquences, il y a peu de chance de modifier de manière importante les fonctions de transfert lors du déplacement au cours de la communication d'un obstacle de dimensions réduites.

Il est à noter que le nombre de contraintes possibles, y compris les contraintes sur le gain en champ lointain, dépend du nombre de degrés de liberté disponibles. Le nombre de contraintes exactes (en module et en phase) est en théorie inférieur à N-1, le nombre de contraintes partielles (sur le module ou sur la phase exclusivement), est en théorie inférieur à 2N-1, N étant le nombre de microphones. Il est nécessaire de limiter le nombre de contraintes sous peine de dégrader sensiblement les propriétés directionnelles de l'antenne en champ lointain. Néanmoins, si le nombre de contraintes s'avère supérieur, le problème d'optimisation ne peut plus être résolu de façon exacte et il convient de minimiser l'écart quadratique entre le vecteur C(f)w(f) et le vecteur de contrainte désiré **s**(f).

ANNEXE 1

Directivité

Un capteur est caractérisé par sa directivité dans l'espace qui est habituellement mesurée dans deux plans orthogonaux et représentée en coordonnées polaires $(r, \varphi, \theta)$ sous la forme de deux diagrammes. Lorsque le capteur est de révolution autour d'un axe. la directivité mesurée dans un plan passant par cet axe est alors dite directivité en site. La directivité mesurée dans le plan orthogonal est dite directivité en gisement. Habituellement, seule la directivité en site dans le plan passant par le maximum de la directivité en gisement est mesurée. La directivité donne une image du niveau de signal capté par le capteur pour une source sonore ponctuelle située dans une direction $(\varphi, 0)$ et à une distance r du centre du capteur.

Les microphones utilisés en acoustique aérienne présentent généralement une symétrie de révolution autour de leur axe de référence. Par définition, le microphone sera dit :

- omnidirectionnel si sa sensibilité est indépendante de la direction d'incidence de l'onde acoustique,
- bidirectionnel d'ordre n si sa sensibilité peut se mettre sous la forme:

$$|M(\omega,\phi)| = A(\omega)\cos^n\phi \tag{9}$$

où $A(\omega)$ est une variable fonction de la fréquence et n un entier positif,
- unidirectionnel d'ordre n si sa sensibilité peut s'écrire sous la forme:

$$\left|M(\omega,\phi)\right| = A(\omega)\left[\frac{1+\beta\cos\phi}{1+\beta}\right]\cos^{n-1}\phi \tag{10}$$

avec $\beta$ constante positive appelée constante de cardioïcité. Le cas $\beta=1$ correspond à une directivité cardioïde, $\beta=\sqrt{3}$ à une directivité supercardioïde et $\beta=3$ à une directivité hypercardioïde.

Les antennes sont généralement constituées de microphones discrets. Les N microphones séparés entre eux d'une distance d captent la pression en un endroit localisé de l'espace et opèrent un échantillonnage spatial du champ sonore. Le comportement de ces antennes discrètes peut s'analyser par analogie avec la numérisation des signaux échantillonnés sur une période T :

$T \Leftrightarrow d$ ou encore $T \Leftrightarrow \vec{d}$ pour le cas tridimensionnel

La fonction d'excitation qui traduit le champ de pression reçu par les microphones, pour une antenne acoustique dont les capteurs ont la même sensibilité et ont un même coefficient de pondération, s'écrit sous la forme suivante :

$$i_n(x) = \frac{1}{N} \sum_{n=-\frac{N-1}{2}}^{\frac{N-1}{2}} \delta(x - nd) \qquad (11)$$

En procédant à la transformée de Fourier spatiale, il est possible d'en déduire le spectre spatial de l'antenne $\Omega(u/\lambda)$

$$\Omega(u/\lambda) = \int_{-\infty}^{+\infty} i_n(x) e^{-j2\pi n \frac{u}{\lambda}} dx = \sum_{n=-\frac{N-1}{2}}^{\frac{N-1}{2}} e^{-j2\pi nd\frac{u}{\lambda}} \qquad (12)$$

Une autre interprétation de cette expression formelle peut être obtenue en considérant l'antenne comme un échantillonneur spatial tronqué par une fenêtre rectangulaire. En conséquence, la fonction d'excitation peut s'écrire sous la forme :

$$i_n(x) = \frac{1}{N} rectL(x) \sum_{n=-\infty}^{\infty} \delta(x - nd) \text{ avec } L=Nd \text{ et}$$
$$rectL(x) = \begin{cases} 1 & \text{si} & -L/2 \le x \le L/2 \\ 0 & \text{si} & x < -L/2 \text{ ou } x > L/2 \end{cases} \qquad (13)$$

L correspond à la longueur "effective" de l'antenne qui diffère de la longueur physique $L_p = (N-1)d$.
Par suite, le spectre spatial de l'antenne peut s'écrire sous la forme d'un produit de convolution :

$$\Omega(u/\lambda) = TF\{i_n(x)\} = \frac{1}{N} TF\{rectL(x)\} * TF\left\{ \sum_{n=-\infty}^{\infty} \delta(x - nd) \right\} \qquad (14)$$

Le premier terme conduit à un sinus cardinal (correspondant au spectre spatial de l'antenne continue):

$$TF\{rectL(x)\} = \frac{\sin(\pi L u/\lambda)}{\pi L u/\lambda} \qquad (15)$$

Quand au second, il a pour expression :

$$TF\left\{ \sum_{n=-\infty}^{\infty} \delta(x - nd) \right\} = \sum_{m=-\infty}^{\infty} \delta\left( u - \frac{m\lambda}{d} \right) \qquad (16)$$

La transformée de Fourier d'un train d'impulsions équidistantes de d dans l'espace physique conduit également à un train d'impulsions équidistantes de $\lambda/d$ dans le domaine des fréquences spatiales.
La convolution de l'équation (15) avec l'équation (16) permet d'obtenir le diagramme directionnel $\Omega(u)$ de l'antenne :

$$\Omega(u/\lambda) = \frac{1}{N}\frac{\sin(\pi L u/\lambda)}{\pi L u/\lambda} * \sum_{m=-\infty}^{\infty} \delta\left(u - \frac{m\lambda}{d}\right) = \frac{1}{N}\sum_{m=-\infty}^{\infty} \frac{\sin\left[(\pi L)\left(\frac{u}{\lambda} - \frac{m}{d}\right)\right]}{(\pi L)\left(\frac{u}{\lambda} - \frac{m}{d}\right)} \qquad (17)$$

Le diagramme polaire correspond à la somme de sinus cardinaux décalés d'un intervalle de $\lambda/d$. Le premier maximum centré en $u=0$ correspond au lobe principal de l'antenne de largueur $\lambda/L$. L'allure du diagramme de la fonction $TF\{rectL(x)\}$ permet de tirer les conclusions suivantes :

- l'antenne sera d'autant plus directive que sa longueur L sera importante,
- par définition, la gamme de fréquence spatiale appelée « partie visible » est délimitée par $-1 \leq u \leq 1$. Si la distance intercapteur devient trop grande au regard de la longueur d'onde, un deuxième lobe apparaît dans la plage visible : c'est l'aliasing spatial. Ce phénomène est tout à fait analogue au repliement de spectre dans le domaine temps-fréquence lorsque le théorème de Shannon n'est pas respecté,
- Si d est suffisamment petit, le diagramme de directivité de l'antenne discrète est très proche de celui de l'antenne continue.

Un calcul direct de la fonction donnée par l'expression (12) normalisée (en remarquant qu'il s'agit d'une suite géométrique) conduit à un déphasage près à l'expression :

$$\Omega(u/\lambda) = \frac{\sin(\pi u N d/\lambda)}{N\sin(\pi u d/\lambda)} \qquad (18)$$

Cette expression est très proche de celle obtenue pour une antenne continue dans le cas où $d \ll \lambda/2$.
La discrétisation de l'antenne a pour conséquence de périodiser le diagramme de directivité de l'antenne continue et impose donc une limitation en hautes fréquences du fait de la présence d'aliasing spatial.

Facteur de directivité

Pour rendre compte des propriétés directionnelles d'un microphone, une méthode consiste à définir son facteur de directivité, lequel caractérise la faculté qu'a le microphone à privilégier une onde perpendiculaire à l'axe de référence (la direction visée) et se dirigeant vers la face avant du microphone, par rapport à l'ensemble des ondes pouvant provenir de toutes les directions de l'espace. Le facteur de directivité s'exprime comme le rapport du carré de la tension produite en sortie du microphone pour une onde arrivant dans l'axe par la moyenne des carrés des tensions produites par les ondes de même pression efficace et de même fréquence provenant dans un angle solide de $4\pi$. Elle peut donc s'exprimer également comme le rapport du carré de l'efficacité en champ libre par l'efficacité en champ diffus. Le champ diffus correspond à l'état d'un champ dans lequel l'énergie volumique moyenne a la même valeur en tous les points et où l'intensité acoustique est la même dans toutes les directions.

Champ lointain/champ proche

Soit une antenne linéaire de longueur L, centrée en x = O, disposée le long de l'axe des abscisses x. Soit un point S de coordonnées $(x_0, y_0)$ tel que la direction OS fait un angle $\varphi$ avec l'axe des abscisses. Le signal reçu par l'antenne placée dans un champ acoustique créé par une source placée au point S correspond à l'ensemble des signaux captés par chaque récepteur élémentaire R(x,y) de l'antenne. Le signal électrique $s(x_0, y_0)$ capté en sortie d'antenne et lié à la présence de la source $S(x_0, y_0)$ a pour expression :

$$s(x_0, y_0) = K \int_{-L/2}^{L/2} \frac{i(x)e^{-jk\left|\vec{RS}\right|}}{\left|\vec{RS}\right|}dx \qquad k = \frac{\omega}{c} = \frac{2\pi}{\lambda} \qquad (19)$$

où K est une constante indépendante de x et i(x) est le champ de pression reçu par chaque récepteur élémentaire.
La distance $\rho$ séparant la source $S(x_0, y_0)$ de chaque récepteur élémentaire R(x,y) de l'antenne s'écrit :

$$\rho = |\vec{RS}| = \sqrt{|\vec{RO}+\vec{OS}|^2} = |\vec{OS}| \sqrt{1+\left(\frac{|\vec{RO}|}{\vec{OS}}\right)^2 + 2\frac{\vec{RO}.\vec{OS}}{|\vec{OS}|^2}} \tag{20}$$

Dans le cas où la source se trouve suffisamment éloignée de l'origine au regard de la dimension de l'antenne ($|\vec{OS}|=\rho_0 > >L$), la dernière expression peut se développer sous la forme d'une série binomiale en ne gardant que les termes prédominants :

$$\left|\vec{RS}\right| \approx \rho_0 \left(1 + \frac{\vec{RO}.\vec{OS}}{|\vec{OS}|^2} + \frac{1}{2}\frac{|\vec{RO}|^2}{|\vec{OS}|^2}\right) \tag{21}$$

Pour le cas de sources en champ lointain ($\rho_0>>L$), le terme d'amplitude présent au dénominateur de l'équation (19) peut être remplacé par le terme $\rho_0$. Il vient :

$$s(x_0, y_0) = \frac{Ke^{-jk\rho_0}}{\rho_0}\int_{-L/2}^{L/2} i(x)e^{-jk\rho_0\left(\frac{\vec{RO}.\vec{OS}}{|\vec{OS}|^2}+\frac{1}{2}\frac{RO^2}{OS^2}\right)}dx \approx \frac{Ke^{-jk\rho_0}}{\rho_0}\int_{-L/2}^{L/2} i(x)e^{-j\left(\vec{k}.\vec{OR}+\frac{k\,RO^2}{2\,OS}\right)}dx \tag{22}$$

En posant $u=\cos\varphi$, il vient l'expression normalisée par rapport à l'axe du diagramme de directivité de l'antenne linéaire :

$$\Omega(k,u) = \int_{-L/2}^{L/2} i_n(x)e^{jk\left(xu-\frac{x^2}{2\rho_0}\right)}dx \tag{23}$$

où $i_n$ correspond au champ de pression qui satisfait à : $|\Omega(k,0)|=1$.

Le premier terme de l'exponentielle sous l'intégrale représente l'intégrale de Fourier spatiale. Celle-ci est associée au diagramme de directivité de l'antenne en champ lointain. Le deuxième terme est nécessaire pour rendre compte du comportement directionnel de l'antenne lorsque la source est en champ proche. Ce terme correctif permet de tenir compte de la courbure du front d'onde. Par analogie avec la théorie de la diffraction de Kirchhoff-Fresnel, le premier terme de l'expression ci-dessus est donc l'analogue de la zone de Fraunhofer (approximation du premier ordre en $x/\rho_0$). En outre, la taille limitée de l'antenne peut être interprétée comme l'effet d'un écran virtuel parfaitement anéchoïque masquant une antenne de longueur infinie et les deux hypothèses de Kirchhoff sont en conséquence respectées. Il n'est donc pas surprenant d'observer dans ce cas une grande similitude dans les résultats. En l'occurrence, à l'instar de la théorie de la diffraction qui conduit à affirmer que la figure de diffraction est la transformée de Fourier double de la fonction d'ouverture, voir l'ouvrage de M.Bruneau "Introduction aux théories de l'acoustique", éditions Université du Maine, Le Mans, 1983 p. 370, la figure de directivité de l'antenne est la transformée de Fourier spatiale de la fonction d'excitation. Cette transformée de Fourier est mono dimensionnelle si l'antenne est rectiligne, double si l'antenne est planaire et voire triple si l'antenne est tridimensionnelle. La formule générale de la sortie de l'antenne est la suivante :

$$\Omega(\vec{k},\omega) = \iiint_V i_n(\vec{x},\omega)e^{-j\vec{k}.\vec{OR}}dV \tag{24}$$

Le deuxième terme de l'exponentielle sous l'intégrale de l'expression (23) caractérise la zone de Fresnel (approximation du second ordre en $x/\rho_0$). Tout comme le rayonnement d'un piston oscillant, si la fonction d'excitation (la pression acoustique) reste constante le long de l'antenne, pour $u=0$, la contribution de l'intégrale de Fresnel peut s'exprimer à l'aide de la spirale de Cornu voir l'ouvrage de M.Bruneau "Introduction aux théories de l'acoustique", éditions Université du Maine, Le Mans, 1983 p. 301.

Si la distance $\rho_0$ est suffisamment grande au regard de l'ouverture *L* de l'antenne, l'expression (23) montre que le terme quadratique de la phase a peu d'influence dans l'intégrale. La distance $\rho_o$ minimale à partir de laquelle il est envisageable de considérer uniquement le cas champ lointain peut d'ailleurs être obtenue au moyen de cette spirale de Cornu lorsque u=0, voir l'ouvrage de B.Steinberg, "Principles of aperture and array system design", Wiley-interscience publications, John Wiley & Sons, New York, 1976. Ce dernier a montré que pour $\rho_0 = L^2/2\lambda$, l'ignorance du terme de second ordre implique une erreur inférieur à 1 dB. La valeur arbitrairement retenue pour séparer champ lointain de champ proche est alors donnée par :

$$\rho_0 > L^2/\lambda \qquad (25)$$

Il est important de noter que la limite entre champ lointain et champ proche est directement liée à la taille de l'antenne et évolue comme le carré de sa longueur.

A titre d'exemple, pour une antenne de longueur L=40 cm et $\rho_o$=3m, la condition (25) implique f<6300 Hz. En conséquence, compte tenu de la bande de fréquences de la parole retenue pour la mise en oeuvre du procédé selon l'invention, un locuteur situé à une telle distance est considéré comme étant en champ lointain au regard du comportement directionnel d'une antenne de 40 cm. Le diagramme de directivité d'une telle antenne peut donc raisonnablement être obtenu par l'intégrale de Fourier spatiale.

Sous l'hypothèse (25), la fonction de directivité complexe $\Omega(u/\lambda)$ de l'antenne en champ lointain obtenue au moyen de l'équation normalisée devient pour le cas d'une excitation homogène *I* le long de l'antenne

$$\Omega\left(\frac{u}{\lambda}\right) = \int_{-L/2}^{L/2} I e^{-j2\pi x \frac{u}{\lambda}} dx = \frac{\sin(\pi L u/\lambda)}{\pi L u/\lambda} \qquad (26)$$

Antennes superdirectives

Une antenne superdirective est une antenne pour laquelle il est effectué une remise en phase des capteurs supérieure à celle correspondant au retard lié au trajet acoustique intercapteurs. Une telle procédure revient à pointer l'antenne vers une région invisible puisque le maximum du lobe principal se trouve désormais en dehors de l'intervalle $-1 \leq u \leq 1$.

Pour une antenne "endfire" à espacement constant entre les capteurs, le retard appliqué sur chaque capteur est de la forme:

$$\tau_n = (1+\eta)\frac{nd}{c} = n\left(\frac{d}{c} + \tau_{sup}\right) \qquad (27)$$

où $\eta$ est une constante positive déterminant la quantité d'« oversteering ». Cette procédure revient à appliquer des retards correspondant à une vitesse de propagation $c/(1+\eta)$ inférieure à la vitesse du son $c$. Il apparaît clairement qu'un tel pointage permet de rendre le lobe principal plus étroit au détriment de lobes secondaires de niveau relatif plus élevé. En outre, l'oversteering peut également faire apparaître des lobes d'aliasing à des fréquences plus basses conduisant à une condition sur d plus stricte:

$$d < \frac{q\lambda_{min}}{2 + \eta} \qquad (28)$$

Puisqu'une partie de l'énergie utile se trouve dans la partie invisible, la sensibilité est réduite et la réduction du bruit incohérent s'en trouve détériorée. Enfin, en pratique, les performances théoriques optimales sont difficilement réalisables du fait de la grande sensibilité d'une telle synthèse aux petites imperfections du système (disparités entre capteurs, etc...). Les erreurs sur l'amplitude ou la phase des signaux sont généralement non corrélées d'un capteur à l'autre et affectent la formation de voie de manière similaire à un bruit incohérent. L'estimation de la réduction de bruit incohérent constitue donc un bon indicateur de degré de faisabilité d'une telle synthèse.

**Revendications**

1.  Procédé de réduction d'écho, mis en oeuvre avec un dispositif (8) de prise de son multi-capteurs formant une antenne (10) et un dispositif (13) de restitution sonore, qui consiste à soumettre les signaux de sortie des capteurs ($11_m$) à des pondérations complexes **w**(*f*), les dites pondérations **w**(*f*) étant calculées par une maximisation (3) sous contraintes aux basses fréquences et en champ proche du facteur de directivité $F_d(f)$ dont l'expression est la suivante :

$$F_d(f) = \cfrac{1}{\dfrac{1}{4\pi}\, w^H(f) D_r(f) w(f)} \qquad \text{1)}$$

avec

$$\mathbf{D}_r(f) = \int\limits_{\theta=0}^{\pi}\int\limits_{\varphi=0}^{2\pi} W(f,\varphi,\theta)\mathbf{H}(f,r,\varphi,\theta)\mathbf{H}^H(f,r,\varphi,\theta)\sin\theta\, d\theta\, d\varphi \qquad \text{2)}$$

le calcul étant tel que les dites pondérations **w**(*f*) satisfont d'une part une première contrainte linéaire sur le module et la phase de la fonction de transfert du dispositif de prise de son dans des directions données, la formulation de cette première contrainte à chaque fréquence f étant la suivante :

$$C^H(f) w(f) = s(f) \qquad \text{3)}$$

et d'autre part une deuxième contrainte de couplage, ledit procédé étant **caractérisé en ce que** la deuxième contrainte dont la formulation à chaque fréquence f est la suivante :

$$M^H(f) w(f) = 0 \qquad \text{4)}$$

est déterminée à partir de mesures in situ des fonctions de transfert complexes de canaux acoustiques délimités par les entrées des haut-parleurs du dispositif de restitution sonore et les sorties des capteurs composant le dispositif de prise de son, et **en ce que** les dites pondérations **w**(*f*) satisfont en outre des contraintes sur l'ouverture du lobe principal et sur la réduction des lobes d'aliasing et des lobes secondaires, ces dites contraintes s'exprimant sous la forme d'un système d'équations non linéaires :

$$\mathbf{w}^H(f)\mathbf{H}_0(f)\mathbf{H}_0^H(f)\mathbf{w}(f) = g_0(f) \qquad \text{6)}$$
$$\mathbf{w}^H(f)\mathbf{H}_1(f)\mathbf{H}_1^H(f)\mathbf{w}(f) = g_1(f)$$
$$\vdots$$
$$\mathbf{w}^H(f)\mathbf{H}_k(f)\mathbf{H}_k^H(f)\mathbf{w}(f) = g_k(f)$$

système d'équations dans lequel,
**H**i, i=0, ..., k représente le vecteur de propagation entre une source ponctuelle en champ lointain dans la direction angulaire ($\phi_i$, $\theta_i$) et les capteurs de l'antenne et $g_i$ le gain désiré dans cette direction, la solution optimale aux systèmes d'équations 1) à 4) et 6) étant donné par la formule :

$$w(f) = \underline{D}_r^{-1}(f) C(f)\left( C^H(f) \underline{D}_r^{-1}(f) C(f)\right)^{-1} s(f) \qquad \text{8)}$$

et les formules 1) à 4), 6) et 8) étant telles que:

H est le vecteur de propagation dont les éléments sont les valeurs complexes des fonctions de transfert en champ libre entre une source ponctuelle située à la distance r du centre de l'antenne dans la direction définie par les angles polaires $\varphi$ et $\theta$ et chaque capteur de l'antenne, calculées à la fréquence f,

$\mathbf{D}_r(f)$ est la matrice de directivité qui caractérise les propriétés de sélectivité spatiale de l'antenne à la distance r,

$W(f,\phi,\theta)$ sont des pondérations spatiales permettant une atténuation plus importante des ondes provenant des directions des haut-parleurs pour réduire le couplage direct avec ceux-ci,

w(f) est un vecteur des pondérations complexes des signaux de sortie des capteurs à la fréquence f,

$\mathbf{C}(f)$ est une matrice dite "de contraintes" contenant les vecteurs de propagation théoriques calculés à partir d'un modèle de propagation de type champ libre ou mesurés en condition de champ libre,

s(f) sont les gains complexes désirés dans des directions données,

$\mathbf{M}(f)$ est une matrice de contrainte de couplage contenant les fonctions de transfert complexes mesurées in situ des canaux acoustiques délimités par les entrées des haut-parleurs du dispositif de restitution sonore et les sorties des capteurs composant le dispositif de prise de son, dits canaux acoustiques de couplage, et,

$\mathbf{0}$ est un vecteur nul.

2. Procédé de réduction d'écho selon la revendication 1, dans lequel les dites pondérations w(f) satisfont en outre une contrainte non linéaire fixant une limite pour la réduction du bruit incohérent en sortie du dispositif de prise de son, la formulation de cette contrainte non linéaire à chaque fréquence f étant la suivante :

$$w(f)^H w(f) = \frac{1}{R_{l_{min}}(f)} \qquad 5)$$

formulation dans laquelle,

$R_{lmin}(f)$ est la réduction de bruit incohérent minimale souhaitée, c'est-à-dire le rapport de l'énergie de bruit incohérent en sortie du dispositif de prise de son normalisé par le nombre de capteurs sur l'énergie moyenne de bruit incohérent d'un capteur seul.

3. Procédé de réduction d'écho selon l'une des revendications 1 à 2, dans lequel une pondération temporelle est appliquée sur au moins une partie des réponses impulsionnelles des canaux acoustiques de couplage avant application de la deuxième contrainte, pour privilégier l'influence de ces parties correspondant au couplage direct et / ou semi direct dans la détermination des vecteur des pondérations complexes w.

4. Procédé de réduction d'écho selon l'une des revendications 1 à 2, dans lequel les mesures des caractéristiques des canaux acoustiques de couplage sont effectuées au moyen de séquences de longueur maximale appliquées aux entrées de haut-parleurs, du dispositif (13) de restitution sonore, situés au voisinage du dispositif (8) de prise de son à la mise en route du dit dispositif (8) de prise de son.

5. Dispositif (6) de réduction d'écho, destiné à fonctionner avec un dispositif (13) de restitution sonore pour la mise en oeuvre d'un procédé selon l'une des revendications 1 à 4, le dit dispositif comprenant :

- un dispositif (8) de prise de son multi-capteurs formant une antenne (10),
- des moyens (21) de calcul d'une première contrainte, la formulation de cette première contrainte à chaque fréquence f étant la suivante :

$$C^H(f)w(f) = s(f) \qquad 3)$$

- des moyens (14-21) de calcul d'une deuxième contrainte, la formulation de cette deuxième contrainte à chaque fréquence f étant la suivante :

$$M^H(f)w(f) = 0 \qquad 4)$$

- des moyens (22) de calcul de l'équation suivante :

$$w(f) = \underline{D}_r^{-1}(f)C(f)\left( C^H(f)\underline{D}_r^{-1}(f)C(f) \right)^{-1} s(f) \qquad \text{8)}$$

équation dans laquelle

$$\mathbf{D}_r(f) = \int\limits_{\theta=0}^{\pi} \int\limits_{\varphi=0}^{2\pi} W(f,\varphi,\theta)\mathbf{H}(f,r,\varphi,\theta)\mathbf{H}^H(f,r,\varphi,\theta)\sin\theta\, d\theta\, d\varphi \qquad \mathbf{2)}$$

- des moyens de calcul de contraintes sur l'ouverture du lobe principal et sur la réduction des lobes d'aliasing et des lobes secondaires, ces dites contraintes s'exprimant sous la forme d'un système d'équations non linéaires :

$$\mathbf{w}^H(f)\mathbf{H}_0(f)\mathbf{H}_0^H(f)\mathbf{w}(f) = g_0(f) \qquad \mathbf{6)}$$
$$\mathbf{w}^H(f)\mathbf{H}_1(f)\mathbf{H}_1^H(f)\mathbf{w}(f) = g_1(f)$$
$$\vdots$$
$$\mathbf{w}^H(f)\mathbf{H}_k(f)\mathbf{H}_k^H(f)\mathbf{w}(f) = g_k(f)$$

système d'équations dans lequel,

$\mathbf{H}_i$, i=0, ..., k représente le vecteur de propagation entre une source ponctuelle en champ lointain dans la direction angulaire ($\phi_i$, $\theta_i$) et les capteurs de l'antenne et,

$g_i$ le gain désiré dans cette direction,

les formules 2), 3), 4) et 8) étant telles que:

$\mathbf{w}(f)$ est un vecteur des pondérations complexes des signaux de sortie des capteurs à la fréquence f,

$\mathbf{C}(f)$ est une matrice dite "de contraintes" contenant les vecteurs de propagation théoriques calculés à partir d'un modèle de propagation de type champ libre ou mesurés en condition de champ libre,

$\mathbf{s}(f)$ sont les gains complexes désirés dans des directions données,

$\mathbf{M}(f)$ est une matrice de contrainte de couplage contenant les fonctions de transfert complexes mesurées in situ des canaux acoustiques délimités par les entrées des haut-parleurs du dispositif de restitution sonore et les sorties des capteurs composant le dispositif de prise de son, dits canaux acoustiques de couplage, et,

$\mathbf{0}$ est un vecteur nul,

$\mathbf{H}$ est le vecteur de propagation dont les éléments sont les valeurs complexes des fonctions de transfert en champ libre entre une source ponctuelle située à la distance r du centre de l'antenne dans la direction définie par les angles polaires $\varphi$ et $\theta$ et chaque capteur de l'antenne, calculées à la fréquence f,

$\mathbf{D}_r(f)$ est la matrice de directivité qui caractérise les propriétés de sélectivité spatiale de l'antenne à la distance r,

$W(f,\phi,\theta)$ sont des pondérations spatiales permettant une atténuation plus importante des ondes provenant des directions des haut-parleurs pour réduire le couplage direct avec ceux-ci.

6. Dispositif (6) de réduction d'écho selon la revendication 5 comprenant en outre des moyens de calcul d'une contrainte non linéaire fixant une limite pour la réduction du bruit incohérent en sortie du dispositif de prise de son, la formulation de cette contrainte à chaque fréquence f étant la suivante :

$$w(f)^H w(f) = \frac{1}{R_{I_{min}}(f)} \qquad \text{5)}$$

formulation dans laquelle,

$R_{Imin}(f)$ est la réduction de bruit incohérent minimale souhaitée, c'est-à-dire le rapport de l'énergie de bruit incohérent en sortie du dispositif de prise de son normalisé par le nombre de capteurs sur l'énergie moyenne de bruit incohérent d'un capteur seul.

**Patentansprüche**

**1.** Mit einer eine Antenne (10) und eine Tonwiedergabevorrichtung (13) bildenden Tonaufnahmevorrichtung (8) mit Multisensoren umgesetztes Echoreduktionsverfahren, das darin besteht, die Ausgangssignale der Sensoren ($11_m$) komplexen Beurteilungen w(f) zu unterwerfen, wobei die besagten Beurteilungen w(f) durch eine Maximierung (3) unter Beanspruchung bei niedrigen Frequenzen und im nahen Feld des Richtwirkungsfaktors $F_d(f)$ berechnet werden, deren Ausdruck wie folgt ist:

$$F_d(f) = \cfrac{1}{\cfrac{1}{4\pi}\, w^H(f) D_r(f) w(f)} \qquad 1)$$

wobei

$$\mathbf{D}_r(f) = \int_{\theta=0}^{\pi}\int_{\varphi=0}^{2\pi} W(f,\varphi,\theta)\mathbf{H}(f,r,\varphi,\theta)\mathbf{H}^H(f,r,\varphi,\theta)\sin\theta\, d\theta\, d\varphi \qquad 2)$$

wobei die Berechnung derart ist, dass die sogenannten Beurteilungen w(f) einerseits eine erste lineare Beanspruchung auf dem Modul und der Phase der Übertragungsfunktion der Tonaufnahmevorrichtung in den vorgegebenen Richtungen genügen, wobei die Formulierung dieser ersten Beanspruchung in jeder Frequenz f wie folgt ist:

$$C^H(f) w(f) = s(f) \qquad 3)$$

Und andererseits eine zweite Kopplungsbeanspruchung, wobei das genannte Verfahren **dadurch gekennzeichnet ist, dass** die zweite Beanspruchung, deren Formel bei jeder Frequenz f wie folgt ist:

$$M^H(f) w(f) = 0 \qquad 4)$$

Durch Messungen in situ der komplexen Transferfunktionen der durch die Eingänge der Lautsprecher der Tonwiedergabevorrichtung und den die Tonaufnahmevorrichtung bildenden Ausgänge der Sensoren begrenzten akustischen Kanäle bestimmt wird, und dadurch, dass die so genannten Beurteilungen w(f) darüber hinaus den Beanspruchungen auf der Öffnung der Hauptstrahlungskeule und auf der Reduktion der Aliasing-Strahlungskeulen und den sekundären Strahlungskeulen genügen, wobei diese besagten Beanspruchungen in Form eines nicht linearen Gleichungssystems ausgedrückt werden:

$$\begin{aligned} w^H(f)\mathbf{H}_0(f)\mathbf{H}_0^H(f)w(f) &= g_0(f)\\ w^H(f)\mathbf{H}_1(f)\mathbf{H}_1^H(f)w(f) &= g_1(f)\\ &\vdots\\ w^H(f)\mathbf{H}_k(f)\mathbf{H}_k^H(f)w(f) &= g_k(f) \end{aligned} \qquad 6)$$

ein Gleichungssystem, in dem
$H_i$, i = 0, ..., wobei k den Verbreitungsvektor zwischen einer punktuellen Quelle im entfernten Freifeld in der Winkelrichtung ($\phi_i$, $\theta_i$) und die Sensoren der Antenne und g1 den optimalen gewünschten Gewinn in dieser Richtung repräsentiert, wobei die optimale Lösung für die Gleichungssysteme 1) bis 4) und 6) durch folgende Formel ge-

geben wird:

$$w(f) = D_r^{-1}(f)C(f)(C^H(f)D_r^{-1}(f)C(f))^{-1}s(f) \qquad 8)$$

wobei die Formeln 1) bis 4), 6) und 8) derart sind, dass

H der Verbreitungsvektor ist, dessen Elemente die komplexen Vektoren der Übertragungsfunktionen im Freifeld zwischen einer punktuellen, sich in der Entfernung r vom Zentrum der Antenne in der von den polaren Winkeln $\phi$ und $\theta$ definierten Richtung und jedes Antennensensors befindlichen Quelle sind, die in der Frequenz f berechnet werden,

$D_r$ (f) die Richtwirkungs-Matrix ist, die die räumlichen Auswahleigenschaften der Antenne in der Entfernung r kennzeichnet,

$W$(f, $\phi$, $\theta$) die eine größere Abschwächung der aus den Lautsprechern zwecks Reduzierung der direkten Kopplung mit diesen stammenden Wellen erlaubenden räumlichen Beurteilungen sind,

w(f) ein Vektor der komplexen Beurteilungen der Ausgangssignale der Sensoren in der Frequenz f ist,

$C$(f) eine sogenannte "Beanspruchungs" -Matrix mit theoretischen, ausgehend von einem Verbreitungsmodell vom Typ Freifeld gemessenem oder unter Freifeldbedingungen gemessenem Verbreitungsvektoren ist,

s(f) die in den vorgegebenen Richtungen gewünschten komplexen Leistungen sind,

M(f) eine Kopplungs-Beanspruchungs-Matrix mit den komplexen, in situ durch die Eingänge der Lautsprecher der Tonwiedergabevorrichtung und die Ausgänge der die Tonaufnahmevorrichtung bildenden Sensoren begrenzten akustischen, sogenannt akustischen Kopplungs-Kanäle gemessenen Übertragungsfunktionen sind, und

$0$ ein Nullvektor ist.

2. Echoreduktionsverfahren gemäß Anspruch 1, in dem die sogenannten Beurteilungen w(f) darüber hinaus einer nicht linearen, eine Beschränkung für die Reduktion des inkohärenten Geräuschs am Ausgang der Tonaufnahmevorrichtung festlegenden Beanspruchung (4) genügen, wobei die Formulierung dieser nicht linearen Beanspruchung bei jeder Frequenz F wie folgt ist:

$$w^H (f)w(f) = \frac{1}{R_{l_{min}}(f)} \qquad 5)$$

wobei in der Formulierung

$R_{lmin}$(f) die Reduktion des minimalen gewünschten inkohärenten Geräuschs ist, das heißt, das Verhältnis zwischen der inkohärenten Geräuschenergie am Ausgang der durch die Anzahl Sensoren normalisierten Tonaufnahmevorrichtung zur inkohärenten Geräuschenergie eines einzigen Sensors ist.

3. Echoreduktionsverfahren gemäß Anspruch 1 bis 2, in dem eine temporäre Beurteilung auf wenigstens einen Teil der Impulsantworten der akustischen Kopplungskanäle vor der Anwendung der zweiten Beanspruchung angewendet wird, um dem Einfluss dieser der direkten und / oder semi-direkten Kopplung bei der Bestimmung der komplexen Beurteilungsvektoren w entsprechenden Teile den Vorrang einzuräumen.

4. Echoreduktionsverfahren gemäß Anspruch 1 bis 2, in dem die Messungen der Merkmale der akustischen Kopplungskanäle mittels auf die Eingänge von sich beim Starten der besagten Tonaufnahmevorrichtung (8) in der Nähe der Tonaufnahmevorrichtung (8) befindenden Lautsprechern der Tonwiedergabevorrichtung (13) angewendeten Sequenzen maximaler Länge durchgeführt werden.

5. Zum Betrieb mit einer Tonwiedergabevorrichtung (13) bestimmte Echoreduktionsvorrichtung (6) für die Umsetzung eines Verfahrens gemäß Anspruch 1 bis 4, wobei die besagte Vorrichtung Folgendes umfasst:

   - eine eine Antenne (10) bildende Tonaufnahmevorrichtung (8) mit Multisensoren,
   - Mittel (21) zur Berechnung einer ersten Beanspruchung, wobei die Formulierung dieser ersten Beanspruchung bei jeder Frequenz f wie folgt ist.

$$C^H(f)w(f) = s(f) \qquad 3)$$

- Mittel (14 - 21) zur Berechnung einer zweiten Beanspruchung, wobei die Formulierung dieser zweiten Beanspruchung bei jeder Frequenz f wie folgt ist:

$$M^H(f)w(f) = 0 \qquad \qquad 4)$$

- Mittel (22) zur Berechnung der folgenden Gleichung:

$$w(f) = D_r^{-1}(f)C(f)\left(C^H(f)D_r^{-1}(f)C(f)\right)^{-1}s(f) \qquad \qquad 8)$$

wobei in der Gleichung

$$\mathbf{D}_r(f) = \int_{\theta=0}^{\pi}\int_{\varphi=0}^{2\pi} W(f,\varphi,\theta)\mathbf{H}(f,r,\varphi,\theta)\mathbf{H}^H(f,r,\varphi,\theta)\sin\theta d\theta d\varphi \qquad 2)$$

Mittel zur Berechnung von Beanspruchungen auf der Öffnung der Hauptstrahlungskeule und auf der Reduktion der Aliasing-Strahlungskeulen und den sekundären Strahlungskeulen genügen, wobei diese besagten Beanspruchungen in Form eines nicht linearen Gleichungssystems ausgedrückt werden:

$$\mathbf{w}^H(f)\mathbf{H}_0(f)\mathbf{H}_0^H(f)\mathbf{w}(f) = g_0(f)$$
$$\mathbf{w}^H(f)\mathbf{H}_1(f)\mathbf{H}_1^H(f)\mathbf{w}(f) = g_1(f)$$
$$\vdots \qquad\qquad\qquad 6)$$
$$\mathbf{w}^H(f)\mathbf{H}_k(f)\mathbf{H}_k^H(f)\mathbf{w}(f) = g_k(f)$$

ein Gleichungssystem, in dem
$H_i$ , i = 0, ..., wobei k den Verbreitungsvektor zwischen einer punktuellen Quelle im entfernten Freifeld in der Winkelrichtung ($\phi_{i,\,\theta i}$) und die Sensoren der Antenne repräsentiert, und
$g_i$ die in dieser Richtung gewünschte Leistung ist.
wobei die Formeln 2), 3), 4) und 8) derart sind, dass:

    w(f) ein Vektor der komplexen Beurteilungen der Ausgangssignale der Sensoren in der Frequenz f ist,
    C(f) eine sogenannte "Beanspruchungs"-Matrix mit den theoretischen, ausgehend von einem Verbreitungsmodell vom Typ Freifeld oder berechneten oder unter Freifeldbedingungen gemessenen Verbreitungsvektoren ist,
    s(f) die in den vorgegebenen Richtungen gewünschten komplexen Leistungen sind,
    M(f) eine Kopplungs-Beanspruchungs-Matrix mit den komplexen, in situ durch die Eingänge der Lautsprecher der Tonwiedergabevorrichtung und die Ausgänge der die Tonaufnahmevorrichtung bildenden Sensoren begrenzten akustischen, sogenannt akustischen Kopplungs-Kanäle gemessenen Übertragungsfunktionen sind, und
    **0** ein Nullvektor ist,
    **H** der Verbreitungsvektor ist, dessen Elemente die komplexen Werte der Übertragungsfunktionen im Freifeld zwischen einer punktuellen, in einer Entfernung r vom Zentrum der Antenne in der von den polaren Winkeln $\phi$ und $\theta$ und jedes Sensors der Antenne definierten Richtung befindlichen Quelle, die bei der Frequenz f berechnet werden,
    $\mathbf{D}_r$ (f) die Richtwirkungs-Matrix ist, die die räumlichen Auswahleigenschaften der Antenne in der Entfernung r kennzeichnet,
    **W**(f, $\phi$, $\theta$) die eine größere Abschwächung der aus den Lautsprechern zwecks Reduzierung der direkten Kopplung mit diesen stammenden Wellen erlaubenden räumlichen Beurteilungen sind,

6. Echoreduktionsvorrichtung gemäß Anspruch 5, darüber hinaus mit Mitteln zur Berechnung einer eine Begrenzung für die Reduktion des inkohärenten Geräuschs am Ausgang der Tonaufnahmevorrichtung festlegende nicht linearen Beanspruchung, wobei die Formulierung dieser Beanspruchung bei jeder Frequenz f wie folgt ist: jeder Frequenz F wie folgt ist:

$$w^H(f)w(f) = \frac{1}{R_{I_{min}}(f)} \qquad 5)$$

wobei in der Formulierung
$R_{Imin}(f)$ die Reduktion des minimalen gewünschten inkohärenten Geräuschs ist, das heißt, das Verhältnis zwischen der inkohärenten Geräuschenergie am Ausgang der durch die Anzahl Sensoren normalisierten Tonaufnahmevorrichtung zur inkohärenten Geräuschenergie eines einzigen Sensors ist.

**Claims**

1. An echo reduction method, implemented with a multi-sensor sound pickup device forming an antenna (10) and a sound playback device (13), the method consists in submitting the output signals from the sensors ($11_m$) to complex weights **w**(f), said weights **w**(f) being calculated by maximizing (3) the directivity factor $F_d$(f) under low frequency and near field constraints, where the expression for the directivity factor is as follows:

$$F_d(f) = \frac{1}{\frac{1}{4\pi} w^H(f)D_r(f)w(f)} \qquad 1)$$

with

$$1\ \mathbf{D}_r(f) = \int\limits_{\theta=0}^{\pi} \int\limits_{\varphi=0}^{2\pi} W(f,\varphi,\theta)\mathbf{H}(f,r,\varphi,\theta)\mathbf{H}^H(f,r,\varphi,\theta)\sin\theta d\theta d\varphi \qquad 2)$$

the calculation being such that said weights w(f) satisfy on the one hand a linear first constraint on the modulus and the phase of the transfer function of the sound pickup device in given directions, the formulation of this first constraint at each frequency f̲ being as follows:

$$C^H(f)w(f) = s(f) \qquad 3)$$

and on the other hand a second coupling constraint said method being **characterized in that** this second constraint which formulation at each frequency f̲ is as follows:

$$M^H(f)w(f) = 0 \qquad (4)$$

is determined on the basis of in-situ measurements of complex transfer functions of sound channels defined by the inputs of the loudspeakers of the sound playback device and the outputs of the sensors making up the sound pickup device, and **in that** said weights w(f) also satisfy constraints on the aperture of the main lobe and on the reduction of aliasing lobes and secondary lobes, these said constraints being expressed in the form of a system of non-linear equations:

$$\mathbf{w}^{H}(f)\mathbf{H}_{0}(f)\mathbf{H}_{0}^{H}(f)\mathbf{w}(f) = g_{0}(f)$$

$$\mathbf{w}^{H}(f)\mathbf{H}_{1}(f)\mathbf{H}_{1}^{H}(f)\mathbf{w}(f) = g_{1}(f) \qquad \text{6)}$$

$$\vdots$$

$$\mathbf{w}^{H}(f)\mathbf{H}_{k}(f)\mathbf{H}_{k}^{H}(f)\mathbf{w}(f) = g_{k}(f)$$

in which system of equations:

$H_i$, i=0, ..., k represents the propagation vector between a point source in the far field in angular direction ($\phi_i$, $\theta_i$) and the sensors of the antenna; and

$g_i$ is the gain desired in this direction, the optimum solution to system of equations 1) to 4) and 6) is given by the formula :

$$w(f) = D_{r}^{-1}(f)C(f)(C^{H}(f)D_{r}^{-1}(f)C(f))^{-1}s(f) \qquad \text{8)}$$

where formulas 1), 4), 6) and 8) are such that:

**H** is the propagation vector whose elements are the complex values of the free field transfer functions between a point source situated at the distance r from the center of the antenna in the direction defined by polar angles $\phi$ and $\theta$, and each sensor of the antenna, as calculated at the frequency f;

$D_r(f)$ is the directivity matrix which characterizes the spatial selectivity properties of the antenna at distance r;

$W(f, \phi, \theta)$ are spatial weights that enable waves coming from the loudspeaker directions to be attenuated to a greater extent in order to reduce direct coupling with the loudspeakers;

**w**(f) is a vector of complex weights for the output signals from the sensors at the frequency f;

**C**(f) is a "constraint" matrix containing the theoretical propagation vectors calculated on the basis of a free field type propagation model or as measured under free field conditions;

**s**(f) are the desired complex gains in the given directions;

**M**(f) is a coupling constraint matrix containing the complex transfer functions as measured in-situ of the sound channels defined by the inputs to the loudspeakers of the sound playback device and by the outputs from the sensors making up the sound pickup device, referred to as "sound coupling" channels; and

**0** is a zero vector.

2. An echo reduction method according to claim 1, in which said weights **w**(f) also satisfy a non-linear constraint (4) fixing a limit for reducing incoherent noise at the output from the sound pickup device, the formulation of this non-linear constraint at each frequency f being as follows:

$$w^{H}(f)w(f) = \frac{1}{R_{I_{min}}(f)} \qquad \text{5)}$$

in which formulation:

$R_{Imin}(f)$ is the desired minimum incoherent noise reduction, i.e. the ratio of incoherent noise energy at the output from the sound pickup device moralized by the number of sensors divided by the mean incoherent noise energy of a single sensor.

3. An echo reduction method according to any one of claims 1 to 2, in which time weighting is applied to at least a portion of the impulse responses of the sound coupling channels prior to applying second constraint 4) so as to enhance the influence of those portions which correspond to direct and/or semi-direct coupling when determining the complex weight vector **w**.

4. An echo reduction method according to any one of claims 1 to 2, in which the measurements of the characteristics of the sound coupling channels are formed by means of maximum length sequences applied to the inputs of the loudspeakers of the sound playback device (13) situated in the vicinity of the sound pickup device (8) when said sound pickup device (8) is switched on.

5. Echo reduction apparatus (6) for operating with a sound playback device (13) to implement a method according to any one of claims 1 to 4, said apparatus comprising:

- · a multi-sensor sound pickup device (8) forming an antenna (10);
- · means (21) for calculating a first constraint, the formulation of this first constraint at each frequency $\underline{f}$ being as follows:

$$C^H(f)w(f) = s(f) \tag{3}$$

- · means (14-21) for calculating a second constraint, the formulation of this second constraint at each frequency $\underline{f}$ being the following:

$$M^H(f)w(f) = 0 \tag{4}$$

- · means (22) for calculating the following equation:

$$w(f) = D_r^{-1}(f)C(f)(C^H(f)D_r^{-1}(f)C(f))^{-1}s(f) \tag{8}$$

and

$$\mathbf{D}_r(f) = \int_{\theta=0}^{\pi}\int_{\varphi=0}^{2\pi} W(f,\varphi,\theta)\mathbf{H}(f,r,\varphi,\theta)\mathbf{H}^H(f,r,\varphi,\theta)\sin\theta\, d\theta\, d\varphi \tag{2}$$

means for calculating constraints on the aperture of the main lobe and on the reduction of the aliasing lobes and the secondary lobes, these said constraints being expressed in the form of a system of non-linear equations:

$$\mathbf{w}^H(f)\mathbf{H}_0(f)\mathbf{H}_0^H(f)\mathbf{w}(f) = g_0(f)$$
$$\mathbf{w}^H(f)\mathbf{H}_1(f)\mathbf{H}_1^H(f)\mathbf{w}(f) = g_1(f) \tag{6}$$
$$\vdots$$
$$\mathbf{w}^H(f)\mathbf{H}_k(f)\mathbf{H}_k^H(f)\mathbf{w}(f) = g_k(f)$$

in which system of equations:
$H_i$, i=0, ..., k represents the propagation vector between a point source in the far field in angular direction ($\phi_i$, $\theta_i$) and the sensors of the antenna; and
$g_i$ is the gain desired in this direction, formulas (2), (3), (4), and (8) being such that:

$\mathbf{w}(f)$ is a vector of complex weights for the output signals from the sensors at the frequency $\underline{f}$;
$\mathbf{C}(f)$ is a "constraint" matrix containing the theoretical propagation vectors calculated on the basis of a free field type propagation model or as measured under free field conditions;
$\mathbf{s}(f)$ are the desired complex gains in the given directions;
$\mathbf{M}(f)$ is a coupling constraint matrix containing the complex transfer functions as measured in-situ of the sound channels defined by the inputs to the loudspeakers of the sound playback device and by the outputs from the sensors making up the sound pickup device, referred to as "sound coupling" channels;
$\mathbf{0}$ is a zero vector;
$\mathbf{H}$ is the propagation vector whose elements are the complex values of the free field transfer functions between a point source situated at the distance r from the center of the antenna in the direction defined by polar angles $\phi$ and 0, and each sensor of the antenna, as calculated at the frequency $\underline{f}$;

$\mathbf{D}_r$(f) is the directivity matrix which characterizes the spatial selectivity properties of the antenna at distance $\underline{r}$; and

$W$(f, $\phi$, $\theta$) are spatial weights that enable waves coming from the loudspeaker directions to be attenuated to a greater extent in order to reduce direct coupling with the loudspeakers.

6. Echo reduction apparatus (6) according to claim 5, further comprising means for calculating a non-linear constraint fixing a limit for incoherent noise reduction at the output from the sound pickup device, the formulation of this constraint at each frequency f being the following:

$$w^H(f)w(f) = \frac{1}{R_{I_{min}}(f)} \qquad 5)$$

in which formulation:

$R_{Imin}$(f) is the desired minimum incoherent noise reduction, i.e. the ratio of incoherent noise energy at the output from the sound pickup device moralized by the number of sensors divided by the mean incoherent noise energy of a single sensor.

## *FIG. 1*

**1** — Détermination des premières contraintes linéaires de gain
$$C^H(f) \, w(f) = s(f)$$

**2** — Détermination des deuxièmes contraintes
$$M^H(f) \, w(f) = 0$$

Maximisation sous contraintes du facteur de directivité
$$F_d(f) = \dfrac{1}{\dfrac{1}{4\pi} \, w^H(f) \, D_r'(f) \, w(f)}$$

**3**

$$w(f)$$

## *FIG. 3*

**1** — Détermination des premières contraintes linéaires de gain
$$C^H(f) \, w(f) = s(f)$$

**2** — Détermination des deuxièmes contraintes
$$M^H(f) \, w(f) = 0$$

**4** — Détermination d'une troisième contrainte sur le bruit
$$w^H(f) \, w(f) = \dfrac{1}{R_{I_{min}}(f)}$$

**5** — Détermination des quatrièmes contraintes sur les lobes
$$w^H(f) \, H_0(f) \, H_0^H(f) \, w(f) = g_0(f)$$
$$w^H(f) \, H_1(f) \, H_1^H(f) \, w(f) = g_1(f)$$
$$\vdots$$
$$w^H(f) \, H_k(f) \, H_k^H(f) \, w(f) = g_k(f)$$

**3** — Maximisation sous contraintes du facteur de directivité
$$F_d(f) = \dfrac{1}{\dfrac{1}{4\pi} \, w^H(f) \, D_r'(f) \, w(f)}$$

FIG.2

FIG.4

# FIG.5

EP 1 230 784 B1

**14**
Générateur de séquences pseudo-aléatoire

$x(n)$

**15**
CNA $x(t)$

**13**

$h_{estN}(n)$

Calcul de l'intercorrélation $C_{Nxy}(n)$

$y_N(n)$ CAN $y_N(t)$

$h_{est2}(n)$

Calcul de l'Intercorrélation

$y_2(n)$ CAN $y_2(t)$

$h_{est1}(n)$

Calcul de l'intercorrélation $C_{1xy}(n)$

$y_1(n)$ CAN $y_1(t)$

$17_1$

$16_1$

$11_1$

$y_1(t) = h_{1couplage}(t) * x(t)$

$18_1$ Fenêtrage
$19_1$ Ajout de zéros
$20_1$

$h_{est1}(n)$ ⊓ ...00000 FFT $H_{est\_direct1}(\omega)$

$h_{est2}(n)$ ⊓ ...00000 FFT $H_{est\_direct2}(\omega)$

$h_{estN}(n)$ ⊓ ...00000 FFT $H_{est\_directN}(\omega)$

$s(f)$

**21**
Détermination des équations (3) et (4)

**22**
Résolution de l'équation (8)

$w(f)$